# EUROPÄISCHE PATENTSCHRIFT

(11) **EP 3 224 286 B1**
(45) Veröffentlichungstag und Bekanntmachung des Hinweises auf die Patenterteilung: **09.03.2022**
(21) Anmeldenummer: 15805416.3
(22) Anmeldetag: 26.11.2015
(51) Int. Cl.: C08F 8/50, C08F 10/02, C08F 10/06, C08F 255/02, C08F 8/00, C08F 285/00, C08F 287/00, C08F 259/08, C08F 14/26, C08F 222/06, C08F 230/08

(54) **MITTELS EINES MODIFIZIERUNGSREAGENZES MODIFIZIERTE POLYMERE UND VERFAHREN ZU DEREN HERSTELLUNG**
POLYMERS MODIFIED BY MEANS OF A MODIFYING REAGENT AND METHOD FOR PRODUCING SAME
POLYMÈRES MODIFIÉS AU MOYEN D'UN RÉACTIF MODIFICATEUR ET PROCÉDÉ DE LEUR PRODUCTION

(30) Priorität: 26.11.2014 DE 102014117307
(43) Veröffentlichungstag der Anmeldung: 04.10.2017
(73) Patentinhaber: Fraunhofer-Gesellschaft zur Förderung der angewandten Forschung e.V., 80686 München (DE)
(72) Erfinder: BUSCH, Michael, 06130 Halle (DE)
(86) Internationale Anmeldenummer: PCT/EP2015/077820
(87) Internationale Veröffentlichungsnummer: WO 2016/083530

(56) Entgegenhaltungen:
- WO-A1-01/36495
- WO-A1-2011/116759
- DE-A1- 2 728 638
- GB-A- 946 384

## Beschreibung

Die Anmeldung betrifft ein Verfahren zur Herstellung von chemisch modifizierten Polymeren, nämlich von gepfropften Polyolefinen, mittels Einbringens von thermischer Energie und Friktionsenergie in die zu modifizierenden Polymere, sodass aktivierte Zustände entstehen und die chemische Reaktion mit einem Modifizierungsreagenz ermöglicht wird. Die Anmeldung betrifft ferner die mittels dieses Verfahrens hergestellten modifizierten Polymere.

Mittels eines Modifizierungsreagenzes modifizierte Polymere werden häufig auch als gepfropfte Polymere bezeichnet. Strenggenommen sind derartige Pfropfpolymere Polymere mit Hauptketten und Seitenketten, bei denen die Seitenketten an die Polymerhauptkette "gepfropft" werden. Im Rahmen der vorliegenden Anmeldung werden aber im Wesentlichen modifizierte Polymere beschrieben, bei denen an die Hauptkette keine polymeren Seitenketten gepfropft werden, sondern bei denen an die Hauptkette funktionelle Gruppen "gepfropft" werden.

Derartige gepfropfte Polymere sind der Fachwelt seit langer Zeit bekannt. Hierbei werden radikalbildende Substanzen wie Peroxide eingesetzt, die die zu modifizierenden Polymere aktivieren und hierdurch eine Reaktion mit dem Modifizierungsreagenz ermöglichen. Zu nennen ist insbesondere das Verfahren der Schmelzepfropfung, bei dem das zu pfropfende Polymer unter Anwesenheit von "Pfropfmonomeren" und einem Radikalbildner in Schmelze gebracht wird. Nur beispielhaft sei hierbei auf die EP 0 581 360 A2 verwiesen, in der ein Verfahren beschrieben wird, bei dem Polyethylen-Polymere mit Peroxiden und Maleinsäure-Anhydrid in einem Extruder zur Reaktion gebracht werden, sodass ein mit dem Maleinsäure-Anhydrid funktionalisiertes Polymere erhalten wird. Hierbei erfolgt die primäre Reaktion bei einer Temperatur, die bis zu 20 °C über der Schmelztemperatur des Polymers liegen kann.

Auch die Funktionalisierung von Polyolefinen ohne die Anwesenheit von Peroxiden wird beschrieben. So offenbart die WO 2010/036243 A1 ein Verfahren, bei dem Polyolefine mit einem polaren Monomer vermischt werden, wobei die Polymere durch Erwärmen in einen aktivierten Zustand gebracht werden, sodass sie mit dem Monomer reagieren. Damit eine Reaktion stattfinden kann, ist es allerdings erforderlich, als Ausgangsmaterialien Polymere einzusetzen, die Vinyl-Gruppen enthalten, und diese Polymere nachfolgend zu oxidieren, sodass im Ergebnis die Aktivierung des Polymers nur mit einem oxidierten Polyolefin möglich ist.

Bekannt ist ferner, dass sich Polymere, insbesondere Polyolefinkunststoffe, durch thermische Behandlung abbauen lassen. Beispielsweise offenbart die DE 196 23 528 A1 das Spalten von Polyolefinen mittels eines Extruders und einer nachgeschalteten Crackdestillation. Die WO 2011/116759 A1 offenbart ein Verfahren, bei dem Kunststoffe, insbesondere Polyolefine, im Extruder behandelt werden, sodass ein Polymerabbau zu Polyolefinen mit einer engeren Molekulargewichtsverteilung erfolgt.

Die WO 01/36495 A1 offenbart ein Verfahren zur Verminderung des gewichtsmittleren Molekulargewichts M_{w} und damit einhergehend der melt index ratio MIR von Polyethylenen und Polyethylencopolymeren. Hierbei werden die geschmolzenen Polyolefine bei erhöhter Temperatur in einem Reaktor mit mehreren Zonen, insbesondere einem Extruder behandelt. Ferner wird beschrieben, dass dieses Verfahren auch in Anwesenheit eines Funktionalisierungsreagenzes erfolgen kann, beispielsweise kann die Molekulargewichtsverminderung von HDPE bei 400°C in Gegenwart von Maleinsäureanhydrid erfolgen.

Die DE 27 28 638 A1 beschreibt ein Verfahren zur Herstellung chemisch modifizierter Polymer mittels einer Pfropfreaktion. Hierbei werden ein Gerüstpolymeres und ein Pfropfmonomeres in einem Reaktor bei 275 bis 550 °C 15 s bis 10 min behandelt. Allerdings wird nicht offenbart, welche konkreten Randbedingungen für die Wahl von Reaktionstemperatur, Wandungstemperatur und Verweilzeit einzuhalten sind.

Die GB 946,384 A lehrt ein Verfahren zur Herstellung von gepfropften Polymeren, bei dem ein Monoolefin oder ein entsprechendes Copolymeres und ein Monomeres unter Druck in einem Reaktor bei 225 bis 400 °C behandelt werden, ohne dass dabei die Zersetzungstemperatur des Polymers überschritten werden darf.

Eine Aufgabe der vorliegenden Erfindung ist es, ein verbessertes Verfahren zur Herstellung chemisch modifizierter Polymere anzugeben, bei dem insbesondere auf den Zusatz von Hilfsstoffen zur Erzeugung reaktiver Polymer-Spezies verzichtet werden kann, insbesondere auf Radikalbildner wie Peroxide, und dennoch ein gepfropftes bzw. ein modifiziertes Polymer erhalten wird, das als Seitenkette beziehungsweise Seitengruppen das "aufgepfropfte" Modifizierungsreagenz enthält, wobei das modifizierte Polymer insbesondere frei ist von Radikalbildnern oder hieraus durch Nebenreaktionen gebildete Stoffe.

Zumindest eine dieser Aufgaben wird durch den Gegenstand der unabhängigen Patentansprüche gelöst. Unteransprüche und Beschreibung lehren vorteilhafte Weiterbildungen.

Erfindungsgemäß wurde erkannt, dass mit einem Modifizierungsreagenz chemisch modifizierte Polymere (die nachfolgend häufig auch nur als "modifizierte Polymere" bezeichnet werden auch hergestellt werden können, wenn die Aktivierung des zu modifizierenden Polymers in einer Reaktionszone erfolgt, in der für die Modifizierung hinreichend hohe Temperaturen vorherrschen.

Ein Verfahren zur Herstellung von modifizierten Polymeren, nämlich von gepfropften Polyolefinen, weist daher folgende Schritte auf:
Zunächst werden ein zu modifizierendes Polyolefin und ein Modifizierungsreagenz, nämlich ein Pfropfungsreagenz, der Reaktionszone eines Reaktors zugeführt. Die Reaktionszone dient dabei insbesondere dazu, soviel Energie und hierbei insbesondere Wärmeenergie in das zu modifizierende Polymer einzutragen, dass das Polymer in einen aktivierten Zustand gebracht wird, der eine chemische Reaktion mit dem Modifizierungsreagenz erlaubt. Die Energie wird dabei durch Erwärmen der Reaktorinnenwand sowie durch Friktionsenergie, die wiederum im Wesentlichen zur Erwärmung beiträgt, eingetragen. Die Reaktionszone ist also auf der einen Seite eine Friktionszone, insbesondere ist sie aber eine Hochtemperaturzone. Üblicherweise wird das Polymer vor Eintritt in die Reaktionszone in die Schmelze überführt.

Das Polymer und das Modifizierungsreagenz werden durch die Reaktionszone hindurchgeführt, wobei einerseits Friktionsenergie in das Polymer eingetragen wird, die insbesondere durch rotierende dispergierende Elemente erzeugt werden kann, und andererseits durch Heizen thermische Energie in das Polymer eingetragen wird, sodass ein aktiviertes Polymer erhalten wird, das insbesondere freie, durch homolytische Spaltung der Polymerkette erhaltene Radikale aufweisen kann. Dieses aktivierte Polymer kann dann mit dem Modifizierungsreagenz zu dem chemisch modifizierten Polymer reagieren.

Die Temperatur des Polymers innerhalb der Reaktionszone, die über die Temperatur der zur Reaktionszone gehörenden Reaktorwandung gesteuert wird, sowie die Verweilzeit des Polymers in der Reaktionszone werden dabei so gewählt, dass zum einen eine Aktivierung des Polymers möglich ist (insbesondere eine Aktivierung durch Erzeugung der vorstehend genannten freien Radikale), zum anderen aber keine signifikante Depolymerisation des zu modifizierten Polymers stattfindet, sodass sich das mittlere Molekulargewicht des eingesetzten Polymeren und des erhaltenen modifizierten Polymeren im Regelfall nicht wesentlich voneinander unterscheiden.

Erfindungsgemäß wurde erkannt, dass durch das vorstehend beschriebene Verfahren im Vergleich zum Stand der Technik eine thermische Radikalbildung möglich ist, die für die Pfropfung mit den Modifizierungsreagenzien vorteilhaft genutzt werden kann, und dass hierfür im Stand der Technik vorhandenen peroxidischen Primärradikale keine Rolle spielen. Die Pfropfung unter Verwendung peroxidischer Primärradikale hat den Nachteil, dass dabei unerwünschte Nebenprodukte gebildet werden können. Ferner wurde erkannt, dass durch eine sehr kurze Verweilzeit in der Reaktionszone bei den dort vorherrschenden erhöhten Temperaturen eine zu große Fragmentierung des eingesetzten Polymers und gegebenenfalls vorhandener anderer organischen Verbindungen, wie den Modifizierungsreagenzien, verhindert werden kann. Die Verweilzeit wird also so gewählt, dass zwar in einem gewissen Umfang durch homolytische Spaltung der C-C-Polymerkette Polymerradikale gebildet werden, die Folgereaktionen eingehen können; dass diese Spaltung der Polymerketten aber nicht zu einem echten thermischen Abbau der eingebauten Polymere führt. Die Temperatur im System wird daher vorzugsweise so gewählt, dass sich Polymerisation und Depolymerisation in etwa im Gleichgewicht befinden.

Die erreichbare Radikalkonzentration hängt vom Ausmaß der Kettenspaltung ab; werden sehr viele Radikale gebildet, so bedeutet dies jedoch im Regelfall, dass damit ein Polymerabbau einhergeht. Daher steht eine sehr hohe Radikalkonzentration anmeldungsgemäß nicht im Fokus. Dennoch erfolgt durch die Aktivierung der Polymere im Regelfall eine Veränderung der Molekülkettenverteilung (beispielsweise dadurch, dass besonders lange Ketten gespalten werden, ohne dass sie im gleichen Ausmaß durch die gleichzeitig erfolgende Polymerisation wieder sehr lange Ketten aufgebaut werden), sodass mit der erfindungsgemäß beschriebenen Reaktion häufig auch eine Erniedrigung der Viskosität einhergeht (also das modifizierte Polymer eine niedrigere Viskosität aufweist als das eingesetzte, zu modifizierende Polymer).

Die anmeldungsgemäß (in Abwesenheit von Sauerstoff) teilweise auch zu beobachtende Degradation ist also in erster Linie abhängig von der Temperatur und der Verweildauer in der Reaktionszone. Die Kinetik von Polymerabbau und Polymeraufbau ist bekanntlich temperaturabhängig, sodass für jedes Polymer bzw. jedes Polymersystem eine Temperatur angegeben werden kann, bei der Polymerabbaugeschwindigkeit und Polymeraufbaugeschwindigkeit im Wesentlichen im Gleichgewicht sind. Erfindungsgemäß wurde nun erkannt, dass für das zu modifizierende Polymer in der Reaktionszone eine Temperatur besonders geeignet ist, die im Bereich dieser Gleichgewichtstemperatur liegt, und wenn, dann nur geringfügig oberhalb dieser sogenannten Ceiling-Temperatur liegt. Bei Polyethylen beträgt die Ceiling-Temperatur etwa 400 °C bei Polypropylen wird das Gleichgewicht zwischen Abbau und Aufbau etwa bei 370 °C erreicht.

Es ist somit das Verdienst des Erfinders, ein Verfahren zur Verfügung gestellt zu haben, bei dem eine thermische Spaltung von Polyolefinen erfolgt, dennoch aber kein nennenswerter Polymerabbau eintritt und zusätzlich durch die Anwesenheit von Modifizierungsreagenzien eine chemische Modifizierung (beziehungsweise Pfropfung) des eingesetzten Polymers erreicht werden kann. Hierbei kann - falls erforderlich - auch eine nennenswerte Verringerung der Viskosität des Polymers verhindert werden. Unter den vorstehend beschriebenen Gleichgewichtsbedingungen reagiert ein Teil der gebildeten Radikale mit den Modifizierungsreagenzien. Dadurch kommt es offenbar zu einer Beeinflussung des Gleichgewichts zwischen Polymeraufbau und Polymerabbau, die auf einer Reaktion des gebildeten Radikals mit dem Modifizierungsreagenz beruht und dementsprechend auch noch in relevantem Umfang abläuft, wenn die Temperatur des Polymers mehrere °C unter der Ceiling-Temperatur liegt.

Die Bestimmung der Zersetzungstemperatur eines Polymers beziehungsweise der Temperatur, bei der gerade noch keine Zersetzung stattfindet, weil sich Polymerisation und Depolymerisation im Gleichgewicht befinden, ist aufgrund der unterschiedlichen Typen von Polymeren (wie sie beispielsweise bei Polyethylen aufgrund der unterschiedlichen Herstellungsverfahren existieren) aufwendig. Ebenfalls aufwendig ist die genaue Angabe der Temperatur eines die Reaktionszone durchlaufenden Polymers, wenn als Reaktor ein Extruder verwendet wird. Für die hier maßgeblichen Temperaturen, bei denen sich das Polymersystem (noch) im Gleichgewicht befindet, die im Rahmen dieser Anmeldung als Zersetzungstemperatur bezeichnet werden (also der Temperatur, ab deren Überschreitung eine Zersetzung des Polymers zu beobachten ist) wird, hat sich erfindungsgemäß die Thermogravimetrie als geeignet herausgestellt. Hierbei wird im Rahmen der vorliegenden Anmeldung stets auf die DIN EN ISO 11358: 1997 Bezug genommen, in der die Temperatur T_{A} die vorliegend anzugebende Zersetzungstemperatur bezeichnet. Im Fall mehrstufiger Massenabnahmen wird im thermogravimetrischen Spektrum im Regelfall die Massenabnahme bei der höchsten Temperatur den hier relevanten Zersetzungsprozess bezeichnen.

Anmeldungsgemäß wird die in der Reaktionszone einzustellende Temperatur im Wesentlichen über die Temperatur der Reaktorwandung in dieser Zone gesteuert. Aufgrund der Tatsache, dass die Temperatur hoch und die Verweilzeit des Polymers in der Reaktionszone relativ gering ist, wird die Temperatur des Polymers, insbesondere der Polymerschmelze, deutlich unter der Temperatur der Reaktorwandung liegen, so dass die für die Reaktorwandung eingestellte Temperatur deutlich über der mittels Thermogravimetrie ermittelten Zersetzungstemperatur des unmodifizierten Polymers liegen sollte. Bei den anmeldungsgemäß eingestellten Verweilzeiten in der Reaktionszone von im Regelfall maximal 30 Sekunden liegt daher die Temperatur der Reaktorwandung üblicherweise maximal 60 °C über der mittels Thermogravimetrie ermittelten Zersetzungstemperatur des zu modifizierenden Polymers und üblicherweise auch nicht mehr als 15 °C unter dieser Temperatur. Häufig wird die Temperatur der Reaktorwandung nach dieser Ausführungsform in einem Temperaturfenster von 5 °C bis zu 45 °C über der Zersetzungstemperatur liegen und in vielen Fällen wird die Temperatur der Reaktorwandung zwischen 15 °C und bis zu 30 °C über der Zersetzungstemperatur liegen. Die eingestellte Temperatur hängt dabei auch vom Durchsatz und von der Größe des Reaktors ab. Beispielsweise kann bei einem Doppelschneckenextruder mit 44 mm Schneckendurchmesser und einem L/D-Verhältnis von 48D, wenn die Temperatur der Polymerschmelze gleich der Zersetzungstemperatur sein soll, für das anmeldungsgemäße Verfahren bei Durchsätzen von 50 bis 250 kg/h eine Temperatur der Reaktorwand eingestellt werden, die bei sehr niedrigem Durchsatz im unteren Bereich des oben angegebenen Temperaturfensters (beispielsweise bei 5°C) und bei sehr hohem Durchsatz im Bereich des oberen Endes der angegebenen Temperaturen (beispielsweise bei 60°C) liegen. Daneben hat selbstverständlich auch die Verweilzeit einen Einfluss auf die Temperatur der Reaktorwandung. Generell gilt auch, dass bei einem Doppelschneckenextruder mit größerem Schneckendurchmesser die Temperatur der Reaktorwand bei vergleichbaren Durchsätzen (dem Fachmann ist bekannt, was bei unterschiedlich großen Doppelschneckenextrudern vergleichbare Durchsätze sind) höher eingestellt werden muss als bei kleinerem Schneckendurchmesser, um dieselbe Temperatur der Schmelze in der Reaktionszone zu erreichen.

Es versteht sich von selbst, dass - insbesondere bei Temperaturen, die deutlich über der Zersetzungstemperatur liegen oder Temperaturen, die sehr weit unter der Zersetzungstemperatur liegen - die Verweilzeit entsprechend angepasst werden muss.

Eine zu hohe Temperatur in der Reaktionszone führt nicht nur dazu, dass die Depolymerisation gegenüber der Polymerisation zu stark bevorzugt wird, sondern führt auch dazu, dass der Pfropfungsgrad im Regelfall stark absinkt. Auch daher wird man im Regelfall Temperaturen einstellen, die nicht oder nicht zu weit über der mittels Thermogravimetrie ermittelten Zersetzungstemperatur des Polymers liegen.

Als untere Grenze für die Temperatur der Reaktorwandung hat sich - auch wenn diese natürlich ebenfalls von den Zersetzungstemperaturen des eingesetzten Polymers beziehungsweise der eingesetzten Polymersysteme abhängt - eine Temperatur von 300 °C als grober Richtwert herauskristallisiert. Häufig wird diese Untergrenze allerdings höher sein und bei mehr als 320 °C liegen

Wie aus den vorstehenden Äußerungen hervorgeht, können Temperatur und Verweilzeiten nicht unabhängig voneinander betrachtet werden. So kann bei einem gegebenen Polymer eine bezogen auf die Zersetzungstemperatur des Polymers eher hohe Temperatur der Reaktorwandung insbesondere dann gewählt werden, wenn auch sehr kurze Verweilzeiten realisiert werden sollen. Dagegen bedingt eine (nicht anspruchsgemäße) Erniedrigung der Temperatur der Reaktorwandung und damit der Temperatur dieses Polymers in der Reaktionszone im Regelfall eine Verlängerung der Verweilzeiten. Dies kann auch dazu führen, dass bei verhältnismäßig niedrigen Temperaturen eine Verweilzeit von mehr als 30 Sekunden (beispielsweise bis zu 40 oder bis zu 50 Sekunden - in Einzelfällen möglicherweise auch bis zu 1 Minute oder darüber) betragen würde, damit die in den vorstehenden Ausführungen beschriebene Einstellung des Gleichgewichts zwischen Polymerisation und Depolymerisation bei gleichzeitig erfolgender Reaktion des Modifizierungsreagenzes mit den gebildeten Radikalen im gewünschten Umfang erfolgen könnte.

Die Temperatur der Wandung des Reaktors in der Reaktionszone wird anmeldungsgemäß folgendermaßen bestimmt:
Bei Doppelschneckenextrudern umfasst der Reaktor aneinandergereihte Zylindergehäuse. Für eine genaue Temperaturregelung eines einzelnen Gehäuses ist dieses üblicherweise mit einer Heizung, einer Kühlung und einem Temperatursensor versehen. Beispielhaft sei hierbei auf den Aufbau eines Gehäuses für einen Doppelschneckenextruder der ZE-Baureihe der Firma KraussMaffei Berstorff verwiesen. Die Gehäusekühlung erfolgt durch ein Kühlmedium, zum Beispiel Wasser, das das Gehäuse umströmt oder durch im Gehäuse befindliche Kühlkanäle strömt. Die Heizung kann beispielsweise durch auf dem Gehäuse aufliegende oder in Bohrungen des Gehäuses steckende Heizelemente erfolgen. Der Temperatursensor steckt in einer Gehäusebohrung, die wenige Millimeter vor der Gehäuseinnenwand (Reaktorinnenwand) endet.

Die Temperatur der Wandung des Reaktors ist daher die Temperatur, die über die Extrudersteuerung in den Extrudergehäusen eingestellt wird. Der Temperatursensor sitzt - wie vorstehend beschrieben - im Gehäuse und misst daher die Temperatur des Gehäuses. Durch den transienten Wärmefluss vom Gehäuse in das in der Regel schlecht wärmeleitende Polymer, das im Regelfall als schlecht wärmeleitende Polymerschmelze vorliegt, stellt sich ein erheblicher Temperaturgradient ein, was zur Folge hat, dass die im Gehäuse gemessene Temperatur und die reale Temperatur der Schmelze verschieden sind. Insbesondere wenn sich das Gehäuse auf einer sehr hohen Temperatur (beispielsweise größer 300°C) befindet und die Verweilzeiten der Schmelze in dem Gehäuse klein (beispielsweise im Sekundenbereich) sind, ist die Temperatur der Schmelze deutlich niedriger als die Temperatur des Gehäuses respektive der Reaktorwand. Prinzipiell kann an jedem einzelnen dieser Gehäuse in der Reaktionszone eine andere Temperatur eingestellt und damit eine andere Temperatur der Wandung des Reaktors gemessen werden. Es ist aber vielfach vorteilhaft, allen Elementen der Reaktionszone dieselbe Temperatur zuzuordnen. Werden mehrere unterschiedliche Temperaturen verwendet, so wird anmeldungsgemäß unter der Temperatur der Wandung des Reaktors das arithmetische Mittel der Einzeltemperaturen aller Extrudergehäuse der Reaktionszone verstanden. Für Reaktoren, die keine Extruder sind, gilt für die Messung der Temperatur der Wandung des Reaktors Entsprechendes.

Gemäß einer alternativen Ausführungsform wird die Temperatur in der Reaktionszone nicht indirekt über die Temperatur der Reaktorwandung eingestellt, sondern direkt mittels eines Temperaturfühlers bestimmt. Die direkte Temperaturmessung erfolgt dabei bei Extrudern, indem man einen Temperaturfühler bzw. Temperatursensor durch eine durch das Gehäuse durchgehende Bohrung bis in den Schneckenbereich steckt. Damit dieser Sensor im Betrieb nicht von den Schnecken abgeschert wird, muss an dieser Stelle ein durchmesserreduziertes Schneckenelement verwendet werden. Für die Bestimmung der Temperatur des Polymers in der Reaktionszone, wird der Temperaturfühler etwa in der Mitte der gesamten Reaktionszone oder kurz dahinter zu positioniert. Besteht die Reaktionszone aus N Gehäusen, so wird der Temperaturfühler in dem Gehäuse N/2+1 (N gerade) bzw. (N-1)/2+1 (N ungerade) positioniert. Die Temperaturmessung kann dabei beispielsweise mittels Thermoelementen erfolgen. Für Reaktoren, die keine Extruder sind, gilt für die direkte Messung der Temperatur in der Reaktionszone Entsprechendes.

Gemäß der alternativen Ausführungsform wird dann die Temperatur der Reaktorwandung so gewählt, dass am Temperaturfühler eine Temperatur gemessen wird, die maximal 40 °C über der mittels Thermogravimetrie ermittelten Zersetzungstemperatur liegt und üblicherweise auch nicht mehr als 10 °C unter dieser Temperatur. Häufig wird die Temperatur nach dieser Ausführungsform in einem Temperaturfenster von 5 °C unter der Zersetzungstemperatur bis zu 20 °C über der Zersetzungstemperatur liegen und in vielen Fällen wird man die Temperaturführung so gestalten, dass die Temperatur zwischen 0 °C und bis zu 5 °C über der Zersetzungstemperatur liegt. Auch hier versteht sich von selbst, dass - insbesondere bei Temperaturen des Polymers in der Reaktionszone, die deutlich über der Zersetzungstemperatur des unmodfizierten Polymers liegen oder Temperaturen des Polymers in der Reaktionszone, die sehr weit unter dieser Zersetzungstemperatur liegen - die Verweilzeit entsprechend angepasst werden muss. Auch hier hat sich herausgestellt, dass eine Obergrenze für die Verweilzeit häufig bei 30 Sekunden gesetzt werden kann. Bei Temperaturen des Polymers in der Reaktionszone, die sehr deutlich über der Zersetzungstemperatur des unmodfizierten Polymers liegen (also Temperaturen, die insbesondere mehr als 10 °C über dieser Temperatur liegen), wird man Verweilzeiten von unter 10 Sekunden, oder sogar unter 5 Sekunden einstellen. Auch bei Temperaturen des Polymers in der Reaktionszone, die weniger als 10 °C über der Zersetzungstemperatur des unmodfizierten Polymers liegen, wird der Wert von 30 Sekunden im Regelfall nicht überschritten werden, sondern eher unter 15 Sekunden liegen. Wenn gemäß einer nicht anspruchsgemäßen Ausführungsform die Temperatur des Polymers in der Reaktionszone unter der Zersetzungstemperatur des unmodfizierten Polymers liegen würde, insbesondere bei mehr als 10 °C und vor allem bei mehr als 15 °C unter der Zersetzungstemperatur, könnte man auch Verweilzeiten einstellen, die über 30 Sekunden (beispielsweise bis zu 40 Sekunden oder bis zu 50 Sekunden - in Einzelfällen bis zu 1 Minute oder darüber) betragen. Als Untergrenze könnte hier eine Temperatur von 280 °C angegeben werden. Häufig würde diese Untergrenze allerdings höher sein und bei mehr als 300 °C liegen.

Gemäß einer Ausführungsform der Erfindung erfolgt der Eintrag von Friktionsenergie mit einem Extruder, insbesondere einem parallelen gleichsinnig drehenden Doppelschneckenextruder. Die Drehzahl, mit denen der Extruder, insbesondere der Doppelschneckenextruder betrieben wird, hat im Wesentlichen nur einen Einfluss auf die Homogenität der Mischung. Daher sind vom Grundsatz her keine besonderen Vorgaben hinsichtlich der Drehzahlen zu machen; häufig wird man allerdings Drehzahlen von 100 bis 1600 Umdrehungen pro Minute einstellen, vielfach werden 200 bis 1200 Umdrehungen/Minute sinnvoll sein.

Um eine besonders gute Homogenität des modifizierten Polymers zu erreichen, ist selbstverständlich auch eine gute Verteilung des Modifizierungsreagenzes in dem zu behandelnden Polymer erforderlich. Daher wird - wie bereits beschrieben - das Verfahren üblicherweise so durchgeführt, dass das Polymer vor Erreichen der Reaktionszone als Schmelze vorliegt, in der sich das Modifizierungsreagenz besonders gut verteilen kann. Grundsätzlich kann das Modifizierungsreagenz dem Extruder aber auch durch Seitenöffnungen oder in einem separaten Compoundierschritt zugegeben werden. Da die Verweilzeiten häufig sehr kurz sind, wird aber im Regelfall das Modifizierungsreagenz zusammen mit dem zu modifizierenden Polymer der Reaktionszone zugeführt werden.

Anmeldungsgemäß enthält das Modifizierungsreagenz eine Doppelbindung; dies kann entweder eine Doppelbindung zwischen zwei Kohlenstoffatomen sein; es kann aber auch eine Doppelbindung zwischen einem Kohlenstoffatom und einem Heteroatom sein, sofern eine ausreichende Reaktivität vorhanden ist. Es versteht sich von selbst, dass das vorhanden ist. Es versteht sich von selbst, dass das ausgewählte Modifizierungsreagenz an die Reaktionsbedingungen des Verfahrens angepasst sein muss. Dies bedeutet insbesondere, dass das Modifizierungsreagenz bei den Reaktionstemperaturen, die wie vorstehend ausgeführt üblicherweise bei über 300 °C im Polymergemisch liegen, so stabil sein muss, dass es während der Dauer der Verweilzeit seine Funktion zum einen erfüllen kann und sich nicht vorzeitig zersetzt und zum anderen auch die gebildeten Reaktionsprodukte für die Dauer der Verweilzeit stabil sind. Zumindest bei tendenziell empfindlicheren Modifizierungsreagenzien bzw. empfindlicheren modifizierten Polymeren wird das Verfahren daher so durchgeführt werden, dass nach Durchlaufen der Reaktions- beziehungsweise Reaktionszone das Polymergemisch so weit abgekühlt wird, dass keine Zersetzung der auf das Modifizierungsreagenz zurückzuführenden funktionellen Gruppen am Polymer mehr erfolgen kann.

Ferner ist bei der Auswahl des Modifizierungsreagenzes auch zu beachten, dass dieses im zu modifizierenden Polymer so gut verteilbar ist, dass es während der relativ kurzen Reaktionsdauer (beziehungsweise der relativ kurzen Verweilzeit in der Reaktionszone) in ausreichendem Ausmaß mit dem zu modifizierenden Polymer reagieren kann.

Das Modifizierungsreagenz kann eine Siedetemperatur beziehungsweise Zersetzungstemperatur aufweisen, die über dem Schmelzpunkt des zu modifizierenden Polymers liegt. Allerdings kann unter Überdruck gearbeitet werden, wenn bei dieser Temperatur gasförmig vorliegende Stoffe, wie beispielsweise Kohlendioxid oder Wasser, mit dem zu modifizierenden Polymer zur Reaktion gebracht werden sollen. Derartige Stoffe können dann insbesondere dem vor der Reaktionszone vorliegenden Polymergemisch in überkritischem Zustand zugeführt werden. In diesem Fall muss der Druck im Reaktor höher sein als der der Temperatur der Schmelze in der Reaktionszone entsprechende "superkritische Druck" (das heißt der Druck am kritischen Punkt der superkritischen Flüssigkeit) der Modifizierungsreagenzien. Im Fall von Kohlendioxid liegt bei etwa 400°C der superkritische Druck bei etwa 80 bar, bei Wasser beträgt er etwa 225 bar. Technisch kann dieser Druck zum Beispiel durch eine Drossel am Ende des Reaktors oder zumindest am Ende der Reaktionszone (insbesondere durch eine Drossel am Ende des Extruders) realisiert werden. Die Drossel wird soweit geschlossen, bis sich der superkritische Druck, der durch einen Drucksensor gemessen wird, einstellt.

Eine weitere Vorgabe an die Modifizierungsreagenzien ist ferner, dass diese unter den Reaktionsbedingungen nicht mit sich selbst, sondern mit den gebildeten Radikalen reagieren.

Dementsprechend ist es häufig sinnvoll als Modifizierungsreagenzien Verbindungen einzusetzen, die entweder eine gewisse Reaktionsträgheit aufweisen (wie beispielsweise Kohlendioxid) oder die eine sterische Hinderung aufweisen (wie beispielsweise organische Säureanhydride). Gemäß einer Ausführungsform der Erfindung werden daher als Modifizierungsreagenzien Vinylsilane, superkritische Gase wie superkritisches Kohlendioxid oder auch Carbonsäure-Anhydride von ungesättigten Carbonsäuren, insbesondere ungesättigten Bicarbonsäuren, eingesetzt. Es versteht sich von selbst, dass auch andere Carbonsäurederivate oder andere Vinyl-Verbindungen geeignet sind, sofern sie die vorstehenden Vorgaben erfüllen, und insbesondere auch eine gewisse sterische Hinderung oder Reaktionsträgheit aufweisen. Zu nennen sind hierbei beispielsweise zyklische Säureamide und zyklische Ester, die Vinylgruppen tragen.

Als Modifizierungsreagenzien sind ferner folgende Substanzen besonders zu nennen: Acrylsäure, Methacrylsäure, Maleinsäure, Fumarsäure, Itaconsäure, Crotonsäure und die entsprechenden Anhydride dieser Säure, oder auch Derivate der vorgenannten Verbindungen wie Dimethylmaleinsäureanhydrid oder Methylmaleinsäureanhydrid oder auch Verbindungen wie Tetrahydrophthalsäure-Anhydrid. Bei den Vinylsilanen sind insbesondere Trialkoxy-Vinylsilane zu nennen, beispielsweise Vinyl-Trimethoxysilane oder Vinyl-Triethoxysilane. Im Regelfall handelt es sich bei den Modifizierungsreagenzien also um niedermolekulare Verbindungen mit Molekulargewichten von weniger als 250 g/mol.

Anmeldungsgemäß wird als zu modifizierendes Polymer ein Polyolefin eingesetzt. Wie aus den vorstehenden Ausführungen hervorgeht, ist es für das erfindungsgemäß einzusetzende Polymer wichtig, dass bis zu einem gewissen Grad eine Gleichgewichtsreaktion zwischen Polymerisation und Depolymerisation vorliegen kann. Diese Gleichgewichtsreaktion kann besonders häufig bei Polyolefinen beobachtet werden. Grundsätzlich wären aber auch andere Systeme denkbar, insbesondere sind die sogenannten Ceiling-Temperaturen nicht nur bei Polyolefinen bekannt, sondern charakterisieren sehr viele Vinyl-Polymere, beispielsweise Polymere vom Styrol-Typ. Als Polyolefine können anmeldungsgemäß aufgrund der wirtschaftlichen Relevanz Polyethylen-Kunststoffe (die selbstverständlich gemäß jeglichem Herstellungsverfahren hergestellt sein können; also Hochdruck- und Niederdruckverfahren etc.), Polypropylen-Kunststoffe, Block- oder Pfropfcopolymere mit Polyethylenblöcken, Block- oder Pfropfcopolymere mit Polypropylenblöcken (als Copolymer sei beispielsweise Ethylen-Octen-Copolymer genannt), sowie Gemischen dieser Materialien ausgewählt sein.

Die eingesetzten Polyolefine, sind üblicherweise ausgewählt aus vollständig gesättigten Polymeren. Grundsätzlich ist aber auch denkbar, dass die Copolymere, insbesondere die vorstehend genannten Copolymere, ungesättigte Bindungen enthalten. Aufgrund der Tatsache, dass hierbei Konkurrenzreaktionen zu den Reaktionen der Radikale entstehen können, werden anmeldungsgemäß aber vorzugsweise vollständig gesättigte Kunststoffe eingesetzt.

Gemäß einer weiteren Ausführungsform wird das Verfahren so durchgeführt, dass in der Reaktionszone keine Radikalbildner wie Radikale bildende Katalysatoren oder Radikalstarter vorliegen bzw. dass dem eingesetzten Gemisch derartige Stoffe gar nicht erst zugesetzt werden. Insbesondere kann das erfindungsgemäße Verfahren vorteilhafterweise so durchgeführt werden, dass keine Peroxide in der Reaktionszone vorliegen. Dementsprechend kann - wie bereits ausgeführt wurde - die Selektivität des Modifikationsverfahrens erhöht werden und die Problematik von Nebenreaktionen durch den Radikalstarter beziehungsweise den Katalysator unterbunden werden.

Das chemisch modifizierte Polymer zeichnet sich - wie bereits erläutert - dadurch aus, dass verglichen mit dem eingesetzten Polymer keine wesentliche Depolymerisation stattgefunden hat. Lediglich ein Abbau besonders langer Polymerketten kann naturgemäß erfolgt sein, da eine Behandlung eines Polymers am Gleichgewichtspunkt zwischen Polymerisation und Depolymerisation häufig zu einer Vereinheitlichung des Molekulargewichts führen kann. Gemäß einer Ausführungsform weist daher das am Ende der Reaktionszone erhaltene modifizierte Polymer einen zahlenmittleres Molekulargewicht auf, dessen Wert zumindest 60 % des Wertes für das Zahlenmittel des noch nicht modifizierten Polymers beträgt. Üblicherweise ist sogar ein Wert von 80 % und häufig sogar von 90 % des Werts für das Zahlenmittel des nicht-modifizierten Polymers realisierbar. Die Werte für das Zahlenmittel am Ende der Reaktionszone (M_{Z}(nP)) noch nicht modifizierten Polymers beträgt. Üblicherweise ist sogar ein Wert von 80 % und häufig sogar von 90 % des Werts für das Zahlenmittel des nicht-modifizierten Polymers realisierbar. Die Werte für das Zahlenmittel am Ende der Reaktionszone (M_{Z}(nP)) und des Zahlenmittel des nicht modifizierten Polymer (M_{Z}(nP)) wird anmeldungsgemäß mittels Hochtemperatur-Gel-Permeations-Chromatografie bestimmt.

Wie vorstehend erwähnt wurde, kann durch Erhöhung der Temperatur und/oder durch Verlängerung der Verweilzeit in der Reaktionszone ein gewisser Auf- und Abbau von Polymeren stattfinden. Hiermit einher geht im Regelfall eine Veränderung der Viskosität, wenn man das modifizierte Polymer mit dem eingesetzten Polymer vergleicht. Eine Verminderung der Viskosität kann auch für bestimmte Anwendungszwecke des erhaltenen modifizierten Polymers von Vorteil sein. So ist beispielsweise für den Einsatz der modifizierten Polymere als Kunststoff-Additive eine niedrigere Viskosität, als diese beispielsweise bei herkömmlich modifizierten Polyolefinen zu verzeichnen ist, von Vorteil. Gemäß einer Ausführungsform der Erfindung beträgt daher der Quotient η(mP)/ η(nP) zwischen 10⁻⁴ und 1, insbesondere zwischen 5*10⁻³ und 0,8 und häufig zwischen 5*10⁻² und 0,8, wobei η(mP) die Viskosität des modifizierten Polymers am Ende der Reaktionszone ist und η(nP) die Viskosität des noch nicht modifizierten Polymers. Durch die Bildung molekularer Verzweigungen oder Vernetzungen ist es aber auch möglich, dass die Viskosität des erfindungsgemäß modifizierten Polymers höher ist als die des Ausgangspolymers.

Wenn anmeldungsgemäß von Viskosität gesprochen wird, so ist hierbei die dynamische Viskosität gemeint, die mit dem Platte-Platte Rotationsviskosimeter bei einer definierten Temperatur in einem definierten Bereich der Scherrate gemessen wird. Die hierfür bei einem Platte-Platte Rotationsviskosimeter für ein bestimmtes Polymer oder Polymergemisch zu wählende Temperatur und Scherrate sind dem Fachmann bekannt. Für diese Temperatur ist wesentlich, dass ein vollständiges Aufschmelzen des Polymers gewährleistet ist. Für das vorstehend angegebene Verhältnis der Viskositäten haben Scherrate und Messtemperatur aber allenfalls einen geringen Einfluss. Falls dennoch die absolute Temperatur benötigt wird, so sei darauf verwiesen, dass ein vollständiges Aufschmelzen des Polymers gewährleistet ist, wenn die gewählte Temperatur 50 °C über der mittels Differentialthermoanalyse ermittelten Schmelztemperatur des eingesetzten Polymers liegt.

Gemäß einer weiteren Ausführungsform werden als Polyolefine Polyethylene eingesetzt; die Temperatur T der Wandung des Reaktors beträgt dann üblicherweise 385 bis 460 °C, insbesondere 400 bis 430 °C. Verwendet man stattdessen eine Messung der Temperatur mittels eines Temperaturfühlers im System, so beträgt die Temperatur des Polymergemischs in der Reaktionszone 390 °C bis 440 °C, insbesondere 400 bis 420 °C.

Gemäß einer weiteren Ausführungsform wird als Polyolefin ein Polypropylen eingesetzt. Die Temperatur der Wandung des Reaktors beträgt dann insbesondere 355 bis 430 °C, im Regelfall 370 bis 400 °C. Verwendet man hier stattdessen eine Messung der Temperatur mittels eines Temperaturfühlers im System, so beträgt die Temperatur der Polymerschmelze 360 °C bis 410 °C, häufig 370 bis 390 °C.

Die Aufgabe der vorliegenden Erfindung wird auch durch ein Polymer gelöst, das gemäß einer oder mehrerer der vorstehenden Ausführungsformen erhalten wird. Insbesondere handelt es sich hierbei um ein Polyolefin, das gemäß einer oder mehrerer der vorstehend beschriebenen Ausführungsformen hergestellt wird.

Gemäß einer Ausführungsform weist das Polymer auf das Modifizierungsreagenz zurückgehende Seitengruppen auf, deren Anteil bezogen auf das gesamte modifizierte Polymer zumindest 0,1 Gew.-% beträgt. Als Nachweis für den Gewichtsanteil dieser Seitengruppen kann im Fall saurer Seitengruppen, wie sie beispielsweise bei der Umsetzung mit Maleinsäure-Anhydrid erhalten werden, eine Titration dienen. Bei Seitengruppen, die Heteroatome enthalten, kann dies über die Bestimmung der elementaren Zusammensetzung erfolgen; bei NMR-aktiven Heteroatomen, deren Anteil im NMR quantitativ bestimmbar ist, allerdings mittels NMR erfolgt (beispielsweise bei Silanen).

Häufig sind allerdings größere Modifizierungsgrade gewünscht; mit dem anmeldungsgemäßen Verfahren lassen sich auch diese erreichen, insbesondere können anmeldungsgemäß Modifizierungsgrade erreicht werden, die über 1 Gew.-% liegen. Bei besonders gut geeigneten Modifizierungsreagenzien (die also die vorstehend definierten Vorgaben besonders gut erfüllen) können auch Modifizierungsgrade erreicht werden, bei denen der Anteil der Seitengruppen bezogen auf das modifizierte Polymer größer 2 Gew.-% beträgt oder gar größer 5 % beträgt (wie dies beispielsweise bei dem System Hochdruckpolyethylen/Maleinsäureanhydrid erzielt werden kann).

Das anmeldungsgemäße Verfahren wird - ohne die Allgemeinheit der vorstehenden Beschreibung hiermit einschränken zu wollen - nachfolgend noch näher beschrieben und mit Beispielen erläutert:
Für die Herstellung der modifizierten Polymere wird als Reaktor üblicherweise ein Extruder verwendet. Die einzelnen Zylinderabschnitte entlang des Extruders werden temperiert. Dabei befindet sich mindestens ein Abschnitt des Zylinders (der der vorstehend definierten Reaktionszone entspricht) auf der vorstehend angegebenen Temperatur. Temperatur der Reaktorwandung bedeutet hierbei, dass die Innentemperatur des Reaktors beziehungsweise die der Schmelze zugewandte Seite des Zylinders auf diese Temperatur gebracht ist. Insbesondere ist ein paralleler gleichsinnig drehender Doppelschneckenextruder sinnvoll; er wird mit einem vorgegebenen Durchsatz betrieben. In Extrudern lassen sich ein nur kurzzeitiger Kontakt des Materials mit der Wandung des Extruders und eine sehr gute Materialvermischung erreichen, sodass sich eine definierte Reaktionstemperatur und eine definierte Verweilzeit, die für das vorstehend beschriebene Verfahren essenziell sind, besonders leicht realisieren lassen. Durch die intensive Durchmischung und die kurze Verweilzeit wird insbesondere erreicht, dass sich die Polymermasse auch beim Kontakt mit der beheizten Wandfläche, deren Temperatur deutlich über der Polymerschmelze liegen kann, nicht auf deren Temperatur erhitzt, da das zu unerwünschten Spaltungsreaktionen in Richtung niedermolekularerer Verbindungen führen würde.

Die zu modifizierenden Kunststoffe werden dann zusammen mit den Modifizierungsreagenzien dem Reaktor beziehungsweise dem Extruder zugeführt, in die Schmelze überführt und dann mittels der vorstehend beschriebenen Temperaturführung im Extruder kurzzeitig auf die Pfropftemperatur gebracht. Beim Durchgang durch den Extruder werden die zu modifizierenden Kunststoffe und die Modifizierungsreagenzien zunächst vermischt und anschließend durch die Hochtemperaturzone beziehungsweise Reaktionszone geführt.

Als Reaktor kann insbesondere ein paralleler, gleichsinnig drehender Doppelschneckenextruder eingesetzt werden, beispielsweise ein Doppelschneckenextruder mit einem Schneckendurchmesser von 25 mm und der Länge 48D. Die Länge eines Extruders wird üblicherweise in Vielfachen des Schneckendurchmessers D angegeben, z. B. 48D oder 56D. Werden für den gesamten Zylinder zum Beispiel nur Gehäuse der Länge 4D verwendet, so enthält ein Extruder der Länge 48D 12 Gehäuse, Der Doppelschneckenextruder besteht aus drei unterschiedlichen Bereichen, der Plastifizierzone für die Plastifizierung des Kunststoffes, der vorstehend näher beschriebenen Reaktionszone und der Kühlzone, in der das modifizierte Polymer auf eine für den Austrag und die anschließende Granulierung geeignete Temperatur abgekühlt wurde.

Die Plastifizierzone erstreckte sich über eine Länge von 12D, der Verfahrensaufbau (Schnecke und Zylinderelemente) und die Temperaturverläufe waren dem Stand der Technik für die Plastifizierung von Polyethylen entsprechend.

Üblicherweise umfasst die Reaktionszone mehrere Extrudergehäuse. Die Reaktionszone eines Extruders der Länge 48D kann beispielsweise 16D betragen. Werden für den gesamten Zylinder nur Gehäuse der Länge 4D verwendet, so enthält eine Reaktionszone der Länge 16D dann 4 Gehäuse,Die sich an die Plastifizierzone anschließende Reaktionszone wies in den nachfolgenden Beispielen die Länge 28D auf und bestand aus einer sich sieben mal wiederholenden Anordnung von Zahnmischelementen und Förderelementen, wobei die Länge der Zahnmischelemente in jeder Anordnung etwa doppelt so groß war wie die der Förderelemente. Das Erwärmen der Reaktorinnenwand und damit des Polymers in der Reaktionszone erfolgte über die Zylindergehäuse der Reaktionszone. Prinzipiell kann an jedem einzelnen dieser Gehäuse in der Reaktionszone eine andere Temperatur eingestellt werden. Bei den nachfolgenden Beispielen wurde allen Elementen der Reaktionszone aber dieselbe Temperatur zugeordnet, da man auf diese Weise die Verfahrensparameter deutlich reduziert und man somit schneller in der Lage ist, die bestmöglichen Extrudereinstellungen zu finden.

Die Kühlzone erstreckte sich über 8D und bestand aus Förderelementen, die Temperatur wurde linear auf 150°C abgekühlt.

Die Verweilzeit wird anmeldungsgemäß folgendermaßen bestimmt: Die Verweilzeitbestimmung wird dabei für einen Extruder erläutert, sie kann allerdings auch für Reaktoren im Allgemeinen angewendet werden. Dem stabil laufenden Extruder werden einige Gramm Farbbatch am Einzug zugegeben. Die Zugabe erfolgt zum Zeitpunkt t0. Die Zeit, bei der sich eine beginnende Verfärbung des Polymers am Extruderausgang einstellt, ist t1. Die stärkste Verfärbung des Polymers entspricht t2, t3 beschreibt den Beginn der Abnahme der Verfärbung, ab t4 weist das Polymer keine Verfärbung mehr auf. Die Verweilzeit tvG im gesamten Extruder ergibt sich daraus zu tvG = 1/3*t1 + 2/3*t2. Hieraus kann die Verweilzeit in der Reaktionszone errechnet werden, in dem der prozentuale Anteil der Reaktionszone am Gesamtextruder berücksichtigt wird. Dies erfolgt, indem der Anteil EF/EG ermittelt wird, wobei EG für die insgesamt im Extruder eingesetzten Zahnmisch- und Knetelemente steht und EF und für die in der Reaktionszone eingesetzten Zahnmisch- und Knetelemente. Die Verweilzeit in der Reaktionszone tvF ergibt sich daraus zu tvF = tvG * EF/EG.

### Beispiel 1: Umsetzung von Hochdruckpolyethlyen (HDPE) und Maleinsäure-Anhydrid (MSA)

HDPE (Extrusionstype der Firma LyondellBasell) der Viskosität 28000 Pa*s (bei 190 °C und einem Messbereich der Scherrate von 200 ... 800 /s) und 2 Gew.-% MSA werden einem Doppelschneckenextruder (ZE40A-48D der Firma KraussMaffei Berstorff) wie vorstehend erläutert zugeführt. Die Temperatur der Polymerschmelze in der Reaktionszone beträgt 395 °C, die Verweilzeit tvF beträgt 5 Sekunden und die Drehzahl des Extruders 600 rpm. Das modifizierte Material weist eine Viskosität von 23000 Pa*s auf. Der Anteil gebundener MSA-Einheiten beträgt 0,3 Gew.-%, was einer Säurezahl von 3,5 mg KOH/g entspricht.

### Beispiel 2: Umsetzung von HDPE mit einem moderaten Anteil MSA unter Verminderung der Viskosität in Abhängigkeit von der Verweilzeit

HDPE der Viskosität 28000 Pa*s (bei 190 °C und einem Messbereich der Scherrate von 200 ... 800 /s) werden gemeinsam mit 2 Gew.-% MSA einem Doppelschneckenextruder zugeführt. Die Temperatur der Polymerschmelze in der Reaktionszone beträgt 405 °C; die Verweilzeit tvF beträgt 50 Sekunden und die Drehzahl des Extruders 600 rpm. Das gepfropfte Material weist eine Viskosität von 80 Pa*s auf. Der Anteil der gepfropften MSA-Einheiten beträgt 1,8 Gew.-%, was einer Säurezahl von 20 mg KOH/g entspricht.

Führt man denselben Versuch mit einer Verweilzeit von 25 Sekunden durch, so weist das gepfropfte Material eine Viskosität von 215 Pa*s auf. Der Anteil der gepfropften MSA-Einheiten beträgt 1,3 Gew.-%, was einer Säurezahl von 14 mg KOH/g entspricht.

### Beispiel 4: Umsetzung von HDPE mit einem hohen Anteil MSA unter Verminderung der Viskosität in Abhängigkeit von der Verweilzeit

Die Umsetzung erfolgt wie in Beispiel 2 allerdings wird 5 Gew.-% MSA zugeführt und die Verweilzeit tvF beträgt 59 Sekunden. Das gepfropfte Material weist eine Viskosität von 37 Pa*s auf. Der Anteil der gepfropften MSA-Einheiten beträgt 2,8 Gew.-%, was einer Säurezahl von 40 mg KOH/g entspricht.

Führt man denselben Versuch mit einer Verweilzeit von 28 Sekunden durch, so weist das gepfropfte Material eine Viskosität von 181 Pa*s auf. Der Anteil der gepfropften MSA-Einheiten beträgt 3,3 Gew.-%, was einer Säurezahl von 48 mg KOH/g entspricht.

### Beispiel 4: Umsetzung von HDPE und MSA unter variierenden Reaktionsbedingungen

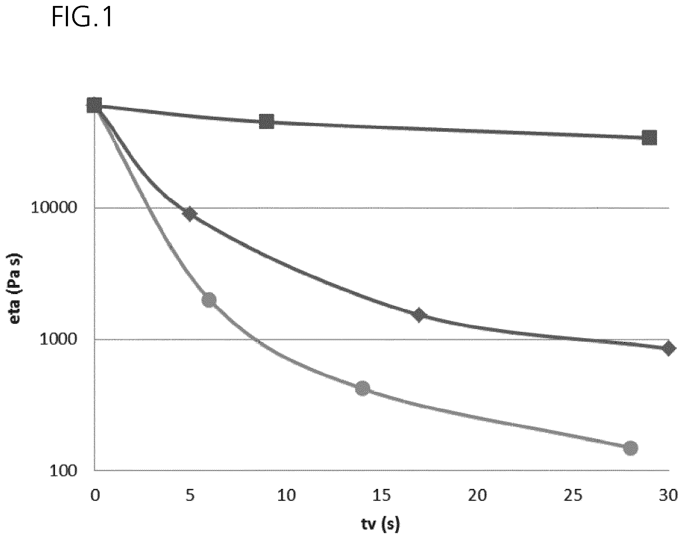

Figur 1 zeigt für ein System, wie es in den Beispielen 1 und 2 beschrieben ist, allerdings 2,5 Gew.-% MSA statt 2 Gew.-% MSA enthält. Es wird die Abhängigkeit von Viskosität des Systems von Verweilzeit tvF in der Reaktionszone und Temperatur des Polymers in der Reaktionszone ermittelt. Man erkennt, dass bei niedrigeren Reaktionstemperaturen (im vorliegenden Fall 380 °C/Quadrate) die Viskosität nur wenig abnimmt, was bedeutet, dass nur in kleinerem Umfang eine Radikalbildung stattfindet und dementsprechend auch nur im kleineren Umfang eine Pfropfung des Polymers erfolgt. Dies ändert sich auch bei relativ langen Verweilzeiten nur schwach. Weist das System dagegen eine sehr hohe Temperatur auf, die deutlich über der Zersetzungstemperatur des eingesetzten Materials liegt (420 °C/Kreise), so sinkt die Viskosität von der Ausgangsviskosität von 60000 Pa*s bei 160 °C sehr schnell ab, sodass nach 30 Sekunden bereits eine Erniedrigung der Viskosität um dem Faktor 500 stattgefunden hat. Dies ist ein Indiz dafür, dass bei derartigen Temperaturen die Verweilzeit deutlich kürzer gewählt werden muss, beispielsweise maximal 5 Sekunden. Ein besonders ausgewogenes System zeigt der Verlauf bei einer Reaktionstemperatur, die in etwa der Zersetzungstemperatur und damit der Gleichgewichtstemperatur zwischen Polymerisation und Depolymerisation entspricht (400 °C/ Rauten). Hier ist zunächst ein kontinuierlicher Abfall der Viskosität zu verzeichnen, der mit der Zeit allerdings deutlich schwächer wird. Dies zeigt, dass die Reaktion zwar schon nach etwa 15 Sekunden Verweilzeit im Wesentlichen abgeschlossen ist, dass aber eine Verlängerung der Verweilzeiten auch nicht unbedingt zu einer negativen Beeinflussung des gewünschten Ergebnisses führt.

### Beispiel 5: Umsetzung von Polyethylen-Wachs und MSA

Polyethylen-Wachs einer mittleren Molmasse Mw von etwa 19000 g/mol und mit einer Viskosität von 17 Pa*s (bei 160 °C und einem Messbereich der Scherrate von 200 ... 800 /s)werden mit 4 Gew.-% MSA einem Doppelschneckenextruder zugeführt. Die Temperatur in der Hochtemperaturzone beträgt 405 °C, die Verweilzeit tvF beträgt 17 Sekunden und die Drehzahl des Extruders 600 rpm. Das modifizierte Material weist eine Viskosität von 17 Pa*s auf, der Anteil gepfropfter MSA-Einheiten beträgt 1,5 Gew.-%, was einer Säurezahl von 17 mg KOH/g entspricht.

### Beispiel 6: Umsetzung von Ethylen-Octen-Copolymer und Vinylsilan

Ethylen-Octen-Copolymer der Marke Engage 8130 werden mit 1,5 Gew.-% Vinylsilan (Dynasilan VTMO) einem Doppelschneckenextruder zugeführt. Die Temperatur in der Reaktionszone beträgt 400 °C, die Verweilzeit tvF beträgt 20 Sekunden und die Drehzahl des Extruders 600 rpm. Das modifizierte Polymer weist einen Silananteil von 0,35 Gew.-% auf, der mit infrarotspektroskopischen Verfahren bestimmt wurde.

## Patentansprüche

1. Verfahren zur Herstellung von gepfropften Polyolefinen, bei dem
- ein Polyolefin, das ausgewählt ist aus Polyethylenkunststoffen, Polypropylenkunststoffen, Block- oder Pfropfcopolymeren mit Polyethylenblöcken, Block- oder Pfropfcopolymeren mit Polypropylenblöcken und Gemischen dieser Materialien, einer Reaktionszone eines Reaktors zugeführt wird,
wobei die Temperatur der Wandung der Reaktionszone des Reaktors mindestens 340 °C beträgt und das Polyolefin eine Zersetzungstemperatur aufweist, die maximal 60°C und mindestens 5 °C unter der Wandungstemperatur liegt, wobei die Zersetzungstemperatur mittels Thermogravimetrie gemäß DIN EN ISO 11358: 1997 ermittelt wird und in der DIN EN ISO 11358: 1997 mit T_{A} bezeichnet wird,
- zusätzlich ein eine Doppelbindung enthaltendes Pfropfungsreagenz der Reaktionszone zugeführt wird,
- das Polyolefin und das Pfropfungsreagenz durch die Reaktionszone hindurchgeführt werden und währenddessen in das Polyolefin Energie eingetragen wird, wobei der Energieeintrag durch Erwärmen der Reaktorinnenwand sowie durch Friktionsenergie erfolgt, so dass durch die eingetragene Energie eine Aktivierung des Polyolefins unter Radikalbildung sowie eine Pfropfung des aktivierten Polyolefins mit dem die Doppelbindung enthaltenden Pfropfungsreagenz zu dem gepfropften Polyolefin stattfindet, wobei
die Verweilzeit des Polyolefins in der Reaktionszone höchstens 30 Sekunden beträgt mit der Maßgabe, dass die Verweilzeit kleiner 10 Sekunden beträgt, wenn das Polyolefinin der Reaktionszone eine Temperatur aufweist, die mehr als 10°C über dieser Zersetzungstemperatur liegt.

2. Verfahren nach dem vorhergehenden Anspruch, wobei der Eintrag von Friktionsenergie mit einem parallelen, gleichsinnig drehenden Doppelschneckenextruder erfolgt.

3. Verfahren nach dem vorhergehenden Anspruch, wobei zum Eintrag von Friktionsenergie der Doppelschneckenextruder bei Drehzahlen von 100 bis 1.600, vorzugsweise 200 bis 1200 Umdrehungen pro Minute betrieben wird.

4. Verfahren nach einem der vorhergehenden Ansprüche, wobei die Verweilzeiten in der Reaktionszone von 1 Sekunde bis 30 Sekunden, insbesondere 5 Sekunden bis 30 Sekunden, betragen.

5. Verfahren nach einem der vorhergehenden Ansprüche, wobei das Pfropfungsreagenz ausgewählt ist aus Vinyl-Silanen, ungesättigten Carbonsäuren und ungesättigten Carbonsäurederivaten oder dass das Pfropfungsreagenz superkritisches Kohlendioxid oder superkritisches Wasser ist.

6. Verfahren nach einem der vorhergehenden Ansprüche, wobei der Reaktionszone keine radikalbildenden Katalysatoren und keine Radikalstarter, insbesondere keine Peroxide zugeführt werden.

7. Verfahren nach einem der vorhergehenden Ansprüche, wobei der Wert für das Zahlenmittel M_{Z}(mP) des am Ende der Reaktionszone vorliegenden modifizierten Polymers mindestens 60%, bevorzugt mindestens 80%, insbesondere mindestens 90% des Werts für das Zahlenmittel M_{Z}(nP) des noch nicht modifizierten Polymers beträgt.

8. Verfahren nach einem der vorhergehenden Ansprüche, wobei der Quotient η(mP)/η(nP) aus der dynamischen Viskosität η(mP) des am Ende der Reaktionszone vorliegenden modifizierten Polyolefinsund der dynamischen Viskosität η(nP) des noch nicht modifizierten Polyolefinszwischen 10⁻⁴ und 1, insbesondere zwischen 5*10⁻³ und 0,8 und häufig zwischen 5*10⁻² und 0,8 liegt.

9. Verfahren nach einem der vorhergehenden Ansprüche , wobei das Polyolefin ein Polyethylenkunststoff ist und die Temperatur T der Wandung des Reaktors 405 bis 460 °C, insbesondere 405 bis 430 °C, beträgt.

10. Verfahren nach einem der vorhergehenden Ansprüche , wobei das Polyolefin ein Polypropylenkunststoff istund die Temperatur T der Wandung des Reaktors 375 bis 430°C, insbesondere 375 bis 400 °C, beträgt.

11. Gepfropftes Polyolefin, erhältlich aus einem Polyolefin und einem eine Doppelbindung enthaltenden Pfropfungsreagenz mit dem Verfahren nach einem der vorhergehenden Ansprüche, wobei das Polyolefin ausgewählt ist aus Polyethylenkunststoffen, Polypropylenkunststoffen, Block- oder Pfropfcopolymeren mit Polyethylenblöcken, Block- oder Pfropfcopolymeren mit Polypropylenblöcken und Gemischen dieser Materialien.

12. Polyolefinnach dem vorhergehenden Anspruch, wobei der Anteil der Seitengruppen bezogen auf das modifizierte Polyolefin zumindest 0,1 Gew.-% beträgt.

13. Polyolefinnach einem der beiden vorhergehenden Ansprüche, wobei das Polyolefin keine radikalbildenden Katalysatoren und keine Radikalstarter oder auf diese radikalbildenden Katalysatoren und keine Radikalstarter zurückzuführenden Nebenprodukte enthält.

## Claims

1. Process for producing grafted polyolefins, wherein
- a polyolefin selected from among polyethylene polymers, polypropylene polymers, block or graft copolymers having polyethylene blocks, block or graft copolymers having polypropylene blocks and mixtures of these materials is fed to a reaction zone of a reactor,
wherein the temperature of the wall of the reaction zone of the reactor is at least 340°C and the polyolefin has a decomposition temperature which is not more than 60°C below and at least 5°C below the wall temperature, wherein the decomposition temperature is determined by means of thermogravimetry analysis in accordance with DIN EN ISO 11358: 1997 and is denoted in DIN EN ISO 11358: 1997 by T_{A},
- a grafting reagent containing a double bond is additionally fed into the reaction zone,
- the polyolefin and the grafting reagent are conveyed through the reaction zone and during this passage energy is introduced into the polyolefin, wherein the input of energy is brought about by heating the interior wall of the reactor and by frictional energy so that activation of the polyolefin with free-radical formation and grafting of the activated polyolefin with the grafting reagent containing the double bond takes place to form the grafted polyolefin as a result of the introduced energy,
wherein
the residence time of the polyolefin in the reaction zone is not more than 30 seconds, with the proviso that the residence time is less than 10 seconds when the polyolefin in the reaction zone has a temperature which is more than 10°C above this decomposition temperature.

2. Process according to the preceding claim, wherein the introduction of frictional energy is effected using a parallel, corotating twin-screw extruder.

3. Process according to the preceding claim, wherein the twin-screw extruder is operated at speeds of from 100 to 1600, preferably from 200 to 1200, revolutions per minute in order to introduce frictionally energy.

4. Process according to any of the preceding claims, wherein the residence times in the reaction zone are from 1 second to 30 seconds, in particular from 5 seconds to 30 seconds.

5. Process according to any of the preceding claims, wherein the grafting reagent is selected from among vinylsilanes, unsaturated carboxylic acids and unsaturated carboxylic acid derivatives or that the grafting reagent is supercritical carbon dioxide or supercritical water.

6. Process according to any of the preceding claims, wherein no free-radical-forming catalysts and no radical initiators, in particular no peroxides, are fed into the reaction zone.

7. Process according to any of the preceding claims, wherein the value of the number average M_{z}(mP) of the modified polymer present at the end of the reaction zone is at least 60%, preferably at least 80%, in particular at least 90%, of the value of the number average M_{z}(nP) of the not yet modified polymer.

8. Process according to any of the preceding claims, wherein the ratio η(mP)/η(nP) of the dynamic viscosity η(mP) of the modified polyolefin present at the end of the reaction zone to the dynamic viscosity η(nP) of the not yet modified polyolefin is in the range from 10⁻⁴ to 1, in particular from 5*10⁻³ to 0.8 and frequently from 5*10⁻² to 0.8.

9. Process according to any of the preceding claims, wherein the polyolefin is a polyethylene polymer and the temperature T of the wall of the reactor is from 405 to 460°C, in particular from 405 to 430°C.

10. Process according to any of the preceding claims, wherein the polyolefin is a polypropylene polymer and the temperature T of the wall of the reactor is from 375 to 430°C, in particular from 375 to 400°C.

11. Grafted polyolefin obtainable from a polyolefin and a grafting reagent containing a double bond by the process according to any of the preceding claims, wherein the polyolefin is selected from among polyethylene polymers, polypropylene polymers, blocked or graft copolymers having polyethylene blocks, block or graft copolymers having polypropylene blocks and mixtures of these materials.

12. Polyolefin according to the preceding claim, wherein the proportion of side groups based on the modified polyolefin is at least 0.1% by weight.

13. Polyolefin according to one of the two preceding claims, wherein the polyolefin contains no free-radical-forming catalysts and no radical initiators or by-products attributable to these free-radical-forming catalysts and radical initiators.

## Revendications

1. Procédé de préparation de polyoléfines greffées, dans lequel
- une polyoléfine qui est choisie parmi des matières plastiques de polyéthylène, des matières plastiques de polypropylène, des copolymères à blocs ou copolymères greffés avec des blocs de polyéthylène, des copolymères à blocs ou copolymères greffés avec des blocs de polypropylène et des mélanges de ces matières, est alimentée à une zone de réaction d'un réacteur,
la température de la paroi de la zone de réaction du réacteur étant d'au moins 340 °C et la polyoléfine présentant une température de décomposition qui se situe au maximum 60 °C et au moins 5 °C en dessous de la température de la paroi, la température de décomposition étant déterminée au moyen d'une thermogravimétrie selon la norme DIN EN ISO 11358:1997 et étant désignée par T_{A} dans la norme DIN EN ISO 11358:1997,
- un réactif de greffage contenant une double liaison est de plus alimenté à la zone de réaction,
- la polyoléfine et le réactif de greffage sont passés à travers la zone de réaction et pendant ce temps-là, de l'énergie est apportée dans la polyoléfine, l'apport d'énergie étant réalisé par chauffage de la paroi intérieure du réacteur ainsi que par énergie de friction, de sorte qu'en raison de l'énergie apportée, une activation de la polyoléfine avec formation de radicaux ainsi qu'un greffage de la polyoléfine activée avec le réactif de greffage contenant la double liaison ont lieu pour donner la polyoléfine greffée le temps de séjour de la polyoléfine dans la zone de réaction étant d'au plus 30 secondes, à la condition que le temps de séjour soit inférieur à 10 secondes lorsque la polyoléfine de la zone de réaction présente une température de plus de 10 °C au-dessus de ladite température de décomposition.

2. Procédé selon la revendication précédente, l'apport d'énergie de friction étant réalisé avec une extrudeuse à deux vis parallèles, tournant dans le même sens.

3. Procédé selon la revendication précédente, l'extrudeuse à deux vis fonctionnant à des vitesses de rotation de 100 à 1 600, de préférence de 200 à 1 200 tours par minute pour l'apport d'énergie de friction.

4. Procédé selon l'une quelconque des revendications précédentes, les temps de séjour dans la zone de réaction étant de 1 seconde à 30 secondes, en particulier de 5 secondes à 30 secondes.

5. Procédé selon l'une quelconque des revendications précédentes, le réactif de greffage étant choisi parmi des vinylsilanes, des acides carboxyliques insaturés et des dérivés d'acides carboxyliques insaturés ou en ce que le réactif de greffage étant du dioxyde de carbone supercritique ou de l'eau supercritique.

6. Procédé selon l'une quelconque des revendications précédentes, aucun catalyseur de formation de radicaux et aucun initiateur de radicaux, en particulier aucun peroxyde, n'étant alimenté à la zone de réaction.

7. Procédé selon l'une quelconque des revendications précédentes, la valeur pour la moyenne en nombre M_{Z}(mP) du polymère modifié présent à la fin de la zone de réaction étant d'au moins 60 %, préférablement d'au moins 80 %, en particulier d'au moins 90 % de la valeur pour la moyenne en nombre M_{Z}(nP) du polymère pas encore modifié.

8. Procédé selon l'une quelconque des revendications précédentes, le quotient η(mP)/η(nP) de la viscosité dynamique η(mP) de la polyoléfine modifiée présente à la fin de la zone de réaction et de la viscosité dynamique η(nP) de la polyoléfine pas encore modifiée se situant entre 10⁻⁴ et 1, en particulier entre 5*10⁻³ et 0,8 et souvent entre 5*10⁻² et 0,8.

9. Procédé selon l'une quelconque des revendications précédentes, la polyoléfine étant une matière plastique de polyéthylène et la température T de la paroi du réacteur étant de 405 à 460 °C, en particulier de 405 à 430 °C.

10. Procédé selon l'une quelconque des revendications précédentes, la polyoléfine étant une matière plastique de polypropylène et la température T de la paroi du réacteur étant de 375 à 430 °C, en particulier de 375 à 400 °C.

11. Polyoléfine greffée, qui peut être obtenue à partir d'une polyoléfine et d'un réactif de greffage contenant une double liaison avec le procédé selon l'une quelconque des revendications précédentes, la polyoléfine étant choisie parmi des matières plastiques de polyéthylène, des matières plastiques de polypropylène, des copolymères à blocs ou copolymères greffés avec des blocs de polyéthylène, des copolymères à blocs ou copolymères greffés avec des blocs de polypropylène et des mélanges de ces matières.

12. Polyoléfine selon la revendication précédente, la proportion de groupes latéraux par rapport à la polyoléfine modifiée étant d'au moins 0,1 % en poids.

13. Polyoléfine selon l'une des deux revendications précédentes, la polyoléfine ne contenant aucun catalyseur de formation de radicaux et aucun initiateur de radicaux ou sous-produits provenant de ces catalyseurs de formation de radicaux et de ces initiateurs de radicaux.
